# FASCICULE DE BREVET EUROPEEN

(11) **EP 3 292 258 B1**
(45) Date de publication et mention de la délivrance du brevet: **04.03.2020**
(21) Numéro de dépôt: 16726922.4
(22) Date de dépôt: 04.05.2016
(51) Int. Cl.: E04H 4/16

(54) **APPAREIL NETTOYEUR DE PISCINE À PILOTAGE OPTIMISÉ**
POOLREINIGER MIT OPTIMIERTER STEUERUNG
POOL CLEANING APPARATUS WITH OPTIMIZED CONTROL

(30) Priorité: 07.05.2015 FR 1554125
(43) Date de publication de la demande: 14.03.2018
(73) Titulaire: Zodiac Pool Care Europe, 69500 Bron (FR)
(72) Inventeur: MICHELON, Thierry, 31200 Toulouse (FR); PICHON, Philippe, 31800 Villeneuve de Rivière (FR)
(74) Mandataire: Ipside
(86) Numéro de dépôt international: PCT/FR2016/051060
(87) Numéro de publication internationale: WO 2016/177978

(56) Documents cités:
- EP-A2- 2 607 573

## Description

La présente invention relève du domaine des équipements pour piscines. Elle concerne plus particulièrement un appareil de nettoyage de piscine comportant des moyens d'optimisation du pilotage pour améliorer le nettoyage du bassin.

### Préambule et art antérieur

L'invention concerne un appareil nettoyeur de surface immergée dans un liquide, telle qu'une surface formée par les parois d'un bassin, notamment d'une piscine. Il s'agit notamment d'un robot mobile de nettoyage de piscine. Un tel robot de nettoyage réalise ledit nettoyage en parcourant le fond et les parois du bassin de la piscine, en brossant ces parois, et en aspirant, dans un filtre, les débris présents dans l'eau ou déposés sur les parois. On désigne par débris toutes les particules présentes au sein du bassin, telles que morceaux de feuilles, microalgues, etc., ces débris étant normalement déposés au fond du bassin ou collés sur les parois latérales de celui-ci.

Le plus couramment, le robot est alimenté en énergie par un câble électrique reliant le robot à une unité extérieure de commande et d'alimentation.

On connaît, par exemple, dans ce domaine, les brevets FR 2 925 557 et FR 2 925 551, de la demanderesse, qui visent un appareil nettoyeur de surface immergée à dispositif de filtrage démontable. De tels dispositifs comprennent un corps, des organes d'entraînement dudit corps sur la surface immergée, une chambre de filtration ménagée au sein du corps et comportant une entrée de liquide, une sortie de liquide, un circuit hydraulique de circulation de liquide entre l'entrée et la sortie à travers un dispositif de filtrage. Dans ces deux brevets, le dispositif de filtrage est amovible pour permettre de vider les feuilles et autres débris sans devoir retourner l'appareil de nettoyage.

Ces appareils disposent de programmes automatiques de nettoyage du fond du bassin et éventuellement des parois latérales du bassin. Un tel programme, choisi par l'utilisateur, détermine un nettoyage de la piscine en un temps prédéterminé, par exemple d'une heure et demi. Le robot parcourt alors la piscine, et doit être retiré de l'eau par l'utilisateur à intervalles réguliers, lorsque le filtre est trop plein de particules (feuilles, microparticules etc.). Dans les modèles récents, l'unité extérieure de commande et d'alimentation du robot émet un signal lorsque cette opération de nettoyage du filtre doit être réalisée.

On constate que, du fait, entre autres, de la géométrie du bassin et de la position des entrées d'eau et des skimmers dans le bassin, des particules restent parfois présentes après un cycle de nettoyage. Il en va de même lorsque le robot est retenu par son câble et ne peut parcourir librement toute la surface de la piscine ou lorsqu'il existe une zone du bassin dont la forme conduit à une agglomération importante de débris (arête de fosse à plonger par exemple).

L'art antérieur connaît la demande de brevet EP 2607573 qui vise la limitation de la consommation électrique d'un robot de nettoyage de piscine par modulation de la puissance d'aspiration de la pompe. La modulation est réalisée en fonction de saletés identifiées par le traitement d'images captées en amont de la bouche d'aspiration du robot. Cet appareil nécessite la mise en oeuvre de moyen de capture d'image coûteux, la qualité du traitement d'image est de plus susceptible d'être affectée par les variations de luminosité.

L'invention a notamment pour but de remédier à certains de ces inconvénients.

L'invention vise notamment à proposer un appareil de nettoyage de piscine réalisant un nettoyage optimisé de la piscine, en termes de temps de nettoyage ou de propreté de l'eau et des parois de la piscine après un cycle de fonctionnement du robot.

### Exposé de l'invention

L'invention vise sous un premier aspect un appareil de nettoyage de piscine selon la revendication 1, comprenant :
- une unité de nettoyage destinée à être immergée dans le bassin de la piscine,
- au moins un circuit hydraulique de circulation de liquide entre au moins une entrée de liquide et au moins une sortie de liquide, à travers un dispositif de filtration de l'unité de nettoyage, adapté à retenir des débris présents dans l'eau,
- une pompe adaptée à forcer une circulation d'eau entre au moins une entrée d'eau et au moins une sortie d'eau au travers du dispositif de filtration,
- des moyens d'entrainement et de guidage permettant d'assurer les mouvements de l'unité de nettoyage,
- des moyens de commande de ces moyens d'entrainement et de guidage.

L'appareil de nettoyage comprend au moins un moyen de détection de débris disposé dans le circuit hydraulique de l'unité de nettoyage.

La détection de débris est notamment réalisée par mesure de la densité desdits débris dans l'eau.

On entend par mesure de la densité aussi bien la mesure de la quantité de débris en suspension dans l'eau, et / ou la mesure de la taille de ces débris.

Ces débris constituent ce que l'appareil de nettoyage est censé extraire du bassin, en décollant ces débris des parois ou du fond, puis en les aspirant et en les retenant dans le filtre de l'unité de nettoyage (appelé également robot de nettoyage).

On comprend que cette mesure de densité de débris, par exemple en entrée du circuit hydraulique de filtration, est représentative de la saleté locale du bassin. De cette manière, le pilotage de l'unité de nettoyage peut comporter des commandes tenant compte de cette saleté locale du bassin, par exemple, en commandant de rester plus longtemps dans les zones ou la densité de débris mesurées est importante, et moins longtemps dans les zones du bassin pour lesquelles la densité de débris mesurée est faible.

Dans un mode particulier de réalisation, les moyens de mesure de densité de débris sont disposés au niveau de l'entrée d'eau dans le circuit hydraulique de filtration.

De cette manière, la mesure est réalisée en amont du filtre et n'est donc pas biaisée par le niveau de remplissage de celui-ci.

Dans un autre mode de réalisation, l'appareil comporte également des moyens de mesurer la densité de débris dans l'eau au niveau de la sortie d'eau du circuit hydraulique de filtration. De cette manière, il est possible de vérifier que l'eau en sortie du robot de nettoyage est complètement purifiée. Si tel n'est pas le cas, il est alors possible soit de commander à l'unité de nettoyage de rester plus longtemps au même endroit, soit d'envoyer à un utilisateur une information de nécessité de vider le filtre.

Dans un mode de réalisation particulier des moyens de mesure de densité de débris, ceux-ci comportent un capteur optique.

Avantageusement les moyens de mesures de densité de débris comportent un capteur de turbidité. On entend par capteur de turbidité un appareil qui mesure les particules solides en suspension dans l'eau en mesurant la quantité de lumière transmise à travers l'eau.

Dans un mode de réalisation le capteur de turbidité comporte une source d'éclairage calibrée et un capteur optique. Avantageusement la source de lumière et le capteur optique peuvent être disposés en regard.

Dans un autre mode de réalisation, éventuellement utilisé en conjonction avec le précédent, les moyens de mesure de densité de débris comportent une caméra et des moyens d'analyse d'image, permettant de déterminer la taille et la nature des débris aspirés.

Dans encore un autre mode de réalisation, éventuellement utilisé en conjonction avec l'un des deux précédents, les moyens de mesure de densité de débris comportent des moyens de mesure de résistivité locale de l'eau.

Dans un autre mode de réalisation, les moyens de mesure comportent un turbidimètre, du type de ceux qui sont utilisés notamment dans les machines à laver la vaisselle. De cette façon, l'équipement est peu onéreux à réaliser, et utilise un matériel éprouvé.

Dans un mode de réalisation particulier, l'appareil de nettoyage de piscine comporte en outre des moyens de modifier la stratégie de nettoyage de l'unité de nettoyage en réponse à la détection de débris.

Dans ce cas, dans divers modes de réalisation, éventuellement utilisés en conjonction, les moyens de modifier la stratégie de nettoyage comprennent :
- des moyens de piloter les mouvements de l'unité de nettoyage au sein du bassin, en réponse à la détection de débris,
- des moyens de modifier la puissance de la pompe, en réponse à la détection de débris,
- des moyens de transmission d'informations vers un utilisateur distant, en réponse à la détection de débris.
- des moyens de transmettre les résultats de la détection de débris dans l'eau à une unité extérieure de pilotage de l'appareil.

L'invention vise sous un second aspect et selon la revendication 11, un procédé de pilotage d'un appareil de nettoyage de piscine tel qu'exposé plus haut, ce procédé comportant de façon cyclique des étapes suivantes :
- obtention de données de densité de débris dans l'eau à l'intérieur du circuit hydraulique de l'unité de nettoyage,
- comparaison de ces données avec un premier seuil, prédéterminé,
- modification de la stratégie de nettoyage de l'unité de nettoyage si et tant que la densité de débris estimée devient supérieure à une valeur maximale préalablement choisie.

Dans un mode de réalisation, la modification de stratégie de nettoyage comporte au moins l'une des opérations suivantes :
- pilotage des mouvements de l'unité de nettoyage au sein du bassin, en réponse à la détection de débris, pour faire évoluer l'unité de nettoyage dans le voisinage de sa localisation actuelle dans la piscine.

De cette façon, l'unité de nettoyage va, par exemple, passer plus de temps dans les zones ou la densité de débris est plus forte qu'un seuil prédéterminé, ou augmenter sa puissance d'aspiration dans cette zone.

Dans un mode de réalisation particulier, éventuellement utilisé en conjonction avec le précédent, le procédé comporte de façon cyclique des étapes suivantes :
- obtention de données de densité de débris dans l'eau en entrée du circuit hydraulique de filtration,
- comparaison des données de densité de saleté avec au moins un second seuil prédéterminé,
- modification des commandes de mouvement de l'unité de nettoyage si et tant que la densité de débris estimée devient inférieure à une valeur minimale préalablement choisie, pour éloigner l'unité de nettoyage de sa localisation actuelle dans la piscine.

De cette façon, l'unité de nettoyage va passer moins de temps dans les zones ou la densité de débris est plus faible qu'un seuil prédéterminé.

Dans un mode particulier de réalisation, le procédé comporte en outre une étape initiale de parcours rapide du bassin par l'unité de nettoyage, tout en procédant à l'acquisition de mesures de densité, et de détermination d'au moins un seuil en fonction des valeurs mesurées lors du parcours rapide du bassin.

De cette manière, le procédé comporte une phase d'apprentissage du taux normal de débris dans le bassin en cours de nettoyage, et peut adapter ses valeurs haute et basse en fonction de la saleté moyenne mesurée. En effet, un bassin en fin d'hivernage est usuellement nettement plus sale qu'en cours de saison normale d'utilisation. Le cycle de nettoyage peut alors tenir compte de cette situation.

Tous les modes de réalisation cités précédemment peuvent naturellement être combinés de toutes les manières techniquement réalisables.

On pourrait prévoir un kit de modification d'un ensemble comprenant un appareil de nettoyage tel qu'exposé et une unité de commande, ledit kit comprenant un appareil de détection de débris dans l'eau, adapté à être installé au sein de l'appareil de nettoyage.

Il comporte éventuellement un programme de pilotage de l'appareil, adapté à être installé dans l'unité de commande et à mettre en oeuvre un procédé de pilotage.

Il est alors possible de modifier un équipement existant, de manière à le doter d'un mode de pilotage adapté à accentuer le nettoyage des zones les plus sales, et au contraire à passer moins de temps sur les zones les plus propres. L'installation d'un capteur de mesure de densité de débris dans le circuit hydraulique de filtration de l'unité de nettoyage doit être réalisée par un professionnel, de même que la mise à jour du logiciel de commande au sein de l'unité de commande.

L'invention vise également un appareil de nettoyage tel qu'exposé, comportant des moyens de transmettre les résultats de la détection de débris dans l'eau à une unité extérieure de pilotage de l'appareil.

L'invention vise alors plus particulièrement sous un autre aspect et selon la revendication 15, un groupe de nettoyage comportant un appareil de nettoyage tel qu'exposé ci-dessus, et une unité extérieur de pilotage de l'appareil, ledit groupe de nettoyage comportant des moyens de transmettre les résultats de la détection de débris dans l'eau à un système de commande et de pilotage d'équipements de la piscine, et des moyens de modifier le pilotage de ceux-ci selon les résultats de détection de débris dans l'eau.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :
La figure 1 illustre une vue en perspective d'un appareil de piscine mettant en oeuvre un système de filtration tel qu'exposé,
La figure 2 illustre une vue en coupe de côté d'un même appareil,
La figure 3 illustre un organigramme du procédé de pilotage de l'unité de nettoyage.

### Description détaillée d'un mode de réalisation de l'invention

L'invention trouve sa place au sein d'un environnement technique de piscine, par exemple une piscine enterrée de type familial.

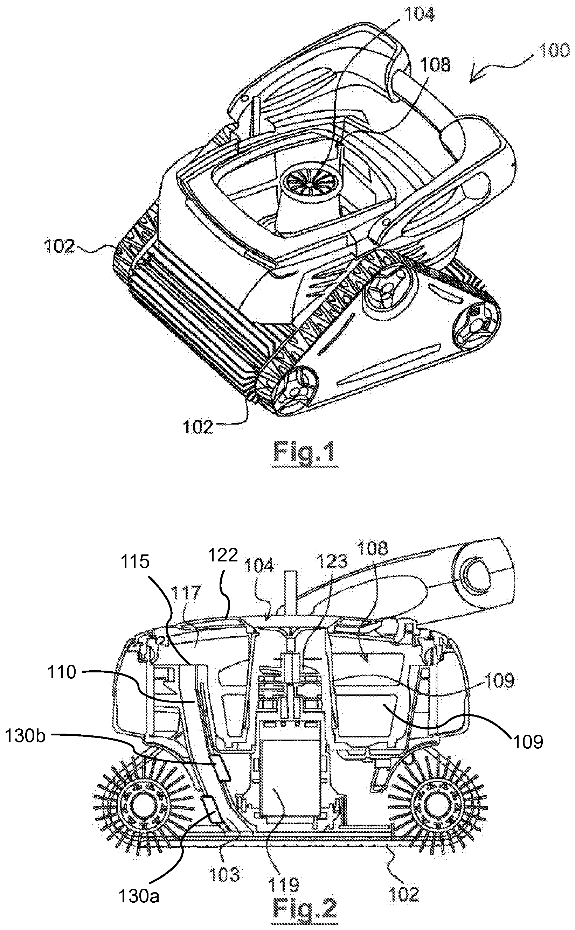

Un appareil nettoyeur de surface immergée est alors représenté selon un mode de réalisation donné ici à titre d'exemple non limitatif, dans les figures 1 et 2. Il comporte une unité de nettoyage, appelé plus loin robot de nettoyage de piscine, et une unité d'alimentation et de commande dudit robot de nettoyage de piscine située hors du bassin.

Le robot de nettoyage de piscine **100** comprend un corps et un dispositif d'entraînement et de guidage comprenant des organes d'entraînement et de guidage **102** du corps sur une surface immergée. Dans le présent exemple non limitatif, ces organes d'entrainement et de guidage 102 sont constitués de roues ou de chenilles disposées de façon latérale au corps (voir figure 1).

Le robot de nettoyage de piscine 100 comprend en outre un moteur entraînant lesdits organes d'entraînement et de guidage 102, ledit moteur étant alimenté via un câble. Dans une variante, Les roues ou chenilles 102 sont commandables indépendamment les unes des autres, de manière à permettre d'orienter librement le robot de nettoyage sur les parois de la piscine, en marche avant ou en marche arrière.

Le robot de nettoyage de piscine 100 présente un circuit hydraulique comportant au moins une entrée de liquide **103** et une sortie de liquide **104.** L'entrée de liquide 103 est, dans le présent exemple non limitatif, située à la base du corps (en d'autres termes sous celui-ci, lorsque le robot de nettoyage de piscine est posé dans sa position de fonctionnement normale au fond de la piscine), c'est-à-dire immédiatement en regard d'une surface immergée sur laquelle se déplace l'appareil 100 afin de pouvoir aspirer les débris accumulés sur ladite surface immergée. La sortie de liquide 104 se situe sur le dessus du robot de nettoyage de piscine 100. Dans le présent exemple de réalisation, la sortie de liquide 104 se fait dans une direction sensiblement perpendiculaire au plan de guidage, c'est-à-dire verticalement si l'appareil de nettoyage repose sur le fond de la piscine.

Le circuit hydraulique relie l'entrée de liquide 103 à la sortie de liquide 104. Le circuit hydraulique est adapté pour pouvoir assurer une circulation de liquide depuis l'entrée de liquide 103 vers la sortie de liquide 104. L'appareil comprend à cet effet une pompe comprenant un moteur **119** et une hélice **123** (voir figure 2), ledit moteur 119 entraînant l'hélice 123 en rotation, ladite hélice 123 étant disposée dans le circuit hydraulique.

Dans le présent exemple de réalisation, l'hélice 123 est disposée en aval du filtre - c'est-à-dire juste en amont de la sortie de liquide 104.

Le moteur électrique 119 anime l'hélice 123 de la pompe de circulation et, éventuellement, le dispositif d'entraînement et de guidage.

Le robot de nettoyage de piscine 100 comprend une chambre de filtration **108** interposée, sur le circuit hydraulique, entre l'entrée de liquide 103 et la sortie de liquide 104.

Dans le présent exemple de réalisation, illustré notamment par la figure 1, la chambre de filtration 108 comprend un panier de filtration **117** et un couvercle 122 formant la paroi supérieure de la chambre de filtration 108.

Le panier de filtration 117 forme le fond et les parois périphériques extérieures et intérieures de la chambre de filtration 108.

Le fond, les parois périphériques extérieures et intérieures de la chambre de filtration 108 comprend au moins une paroi filtrante 109, par laquelle le liquide contenu dans la chambre de filtration 108 est évacué vers la sortie de liquide 104.

Un conduit 110, situé entre l'entrée de liquide 103 dans le circuit hydraulique et l'entrée de liquide 115 dans la chambre de filtration 108, amène l'eau chargée de débris dans la partie supérieure du panier de filtration 117.

Dans d'autres exemples de réalisation, le conduit peut être très court voire inexistant. Dans ce cas, l'entrée de liquide 103 du circuit hydraulique est confondue avec l'entrée de liquide 115 de la chambre de filtration 108.

Le robot de nettoyage de piscine 100 est alimenté en énergie et en commandes de fonctionnement au moyen d'un câble souple. Dans le présent exemple, ce câble souple est attaché au corps du robot de nettoyage de piscine 100 en sa partie supérieure. Ce câble souple est relié, en son autre extrémité, à l'unité d'alimentation et de commande (non illustrée sur la figure 1), disposée à l'extérieur du bassin, cette unité d'alimentation et de commande étant elle-même reliée au courant électrique sur le secteur.

Le robot de nettoyage émet et reçoit également éventuellement des données, de et vers l'unité d'alimentation et de commande. Le robot de nettoyage comporte notamment, dans le présent exemple, des moyens de détecter que l'encrassement du filtre dépasse un seuil prédéterminé, et de transmettre ces données à l'unité d'alimentation et de commande en vue d'émettre une alerte à destination d'un utilisateur. Dans un exemple de réalisation, le robot de nettoyage de piscine 100 comporte un processeur susceptible d'exécuter un algorithme prédéterminé générant des commandes de mouvements du robot et de fonctionnement du circuit de filtration.

Cette unité d'alimentation et de commande comporte également une interface de commande pour qu'un utilisateur du robot de nettoyage puisse choisir, par exemple, un type de cycle de nettoyage, ou interrompre le fonctionnement du robot.

Dans une variante de réalisation, l'unité d'alimentation et de commande comporte un processeur susceptible d'exécuter un algorithme prédéterminé générant des commandes de mouvements du robot de nettoyage de piscine 100, et de fonctionnement du circuit de filtration.

Le robot de nettoyage de piscine 100 comporte ici au moins un dispositif 130a, 130b de détection de débris dans l'eau (appelé turbidimètre dans la suite de la description). Dans le présent exemple de réalisation, un turbidimètre 130 est disposé à l'intérieur du circuit hydraulique, en aval de l'entrée d'eau 103 sur la position 130a ou dans le conduit 110 à la position 130b.

Dans d'autres modes de réalisation une pluralité de turbidimètres sont présents, par exemple aux deux emplacements 130a, 130b décrits ci-avant.

Il s'agit par exemple d'un capteur optique, associée à un moyen de calcul détectant les variations d'opacité de l'eau. Un tel dispositif est alors éventuellement associé à une source d'éclairage calibrée. Il est également possible en variante d'utiliser un dispositif basé sur des mesures de résistivité, ou de tout autre dispositif connu de l'homme de l'art, et adapté à fournir une mesure de la densité de débris flottant dans l'eau en entrée du circuit hydraulique.

Le turbidimètre peut également être installé en surface extérieure du corps du robot, ou au sein d'un second conduit d'eau ne comportant pas de filtre.

Le turbidimètre envoie des données de mesure de façon continue, ou à intervalles réguliers (par exemple toutes les quelques secondes) aux moyens de pilotage des moyens de pompage, d'entrainement et de guidage.

### Mode de fonctionnement

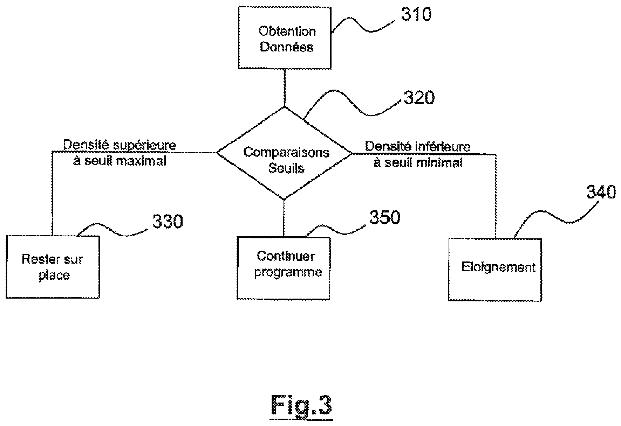

Comme on le voit sur la figure 3, qui illustre à titre non limitatif un organigramme d'un procédé de pilotage d'appareil de nettoyage tel que décrit plus haut, un tel procédé comporte par exemple des étapes suivantes :
- 310. Obtention de données de densité de débris dans l'eau en entrée du circuit hydraulique de filtration,
- 320. Comparaison de ces données avec au moins un seuil prédéterminé,
- 330. Modification des commandes de mouvement de l'unité de nettoyage si et tant que la densité de débris estimée est supérieure à une valeur maximale préalablement choisie, pour faire évoluer l'unité de nettoyage dans le voisinage de sa localisation actuelle dans la piscine,
- 340. Modification des commandes de mouvement de l'unité de nettoyage si et tant que la densité de débris estimée est inférieure à une valeur minimale préalablement choisie, pour éloigner l'unité de nettoyage de sa localisation actuelle dans la piscine,
- 350. Maintien du mode de pilotage antérieur, si et tant que la densité de débris estimée est comprise entre les valeurs minimale et maximale.

Les mouvements commandés autour de la position actuelle de l'unité de nettoyage peuvent consister en des cercles ou en une spirale autour de cette position, voire en des mouvements de nature fractale.

De même, le mouvement d'éloignement peut consister en un déplacement en ligne droite pendant une durée prédéterminée, par exemple quelques secondes, ce qui correspond à une distance de quelques mètres, typiquement six secondes correspondant à un éloignement d'un mètre environ.

En l'absence de données reçues du turbidimètre ou de données sortant d'une plage de valeurs prédéterminée, le procédé de pilotage ne tient plus compte des données du turbidimètre, et revient au mode de pilotage usuel d'une unité de nettoyage, un tel procédé de pilotage étant connu de l'homme du métier et sortant en tant que tel du cadre de la présente invention.

### Variantes

Dans une autre variante, le turbidimètre est installé a posteriori sur une unité de nettoyage préexistante, sous forme d'un kit de mise à niveau. Dans cette variante, la logique exécutée par l'unité d'alimentation et de commande est également modifiée pour prendre en compte les modifications de pilotage à commander selon les données reçues du turbidimètre.

Si on observe une détection de particules en sortie du circuit d'eau, il est possible d'envoyer un message à l'unité de commande qui peut informer l'utilisateur sur une adaptation du fonctionnement du système de filtration et de traitement d'eau.

Si le boitier de commande du robot peut échanger des données avec les boitiers de commande de la filtration et de traitement d'eau, l'ajustement peut être fait automatiquement.

## Revendications

1. Appareil de nettoyage de piscine comprenant :
- une unité de nettoyage (100),
- au moins un circuit hydraulique de circulation de liquide entre au moins une entrée de liquide (103) et au moins une sortie de liquide (104), à travers un dispositif de filtration de l'unité de nettoyage (100),
- une pompe adaptée à forcer une circulation d'eau entre l'entrée de liquide (103) et la sortie de liquide (104) au travers du dispositif de filtration,
- des moyens d'entrainement et de guidage permettant d'assurer les mouvements de l'unité de nettoyage,
- des moyens de commande de ces moyens d'entrainement et de guidage, **caractérisé en ce que** l'appareil de nettoyage comprend au moins un moyen de détection de débris disposé dans le circuit hydraulique de l'unité de nettoyage (100).

2. Appareil selon la revendication 1, **caractérisé en ce que** les moyens de détection de débris comportent des moyens de mesure de densité de débris dans l'eau.

3. Appareil selon l'une quelconque des revendications 1 à 2, **caractérisé en ce que** les moyens de mesure de densité de débris sont disposés entre l'entrée de liquide 103 dans le circuit hydraulique et l'entrée de liquide 115 dans la chambre de filtration 108.

4. Appareil selon l'une quelconque des revendications 1 à 3, **caractérisé en ce que** l'unité de nettoyage (100) comporte également des moyens de mesurer la densité de débris dans l'eau au niveau d'au moins une sortie de liquide (104) du circuit hydraulique de filtration.

5. Appareil selon l'une quelconque des revendications 1 à 4, **caractérisé en ce que** les moyens de mesure de densité de débris comportent un capteur optique.

6. Appareil selon l'une quelconque des revendications 1 à 5, **caractérisé en ce que** les moyens de mesure de densité de débris comportent une caméra et des moyens d'analyse d'image.

7. Appareil selon l'une quelconque des revendications 1 à 6, **caractérisé en ce qu'**il comporte en outre des moyens de modifier la stratégie de nettoyage de l'unité de nettoyage (100) en réponse à la détection de débris.

8. Appareil selon la revendication 7, **caractérisé en ce que** les moyens de modifier la stratégie de nettoyage comprennent des moyens de piloter les mouvements de l'unité de nettoyage au sein du bassin, en réponse à la détection de débris.

9. Appareil selon la revendication 7, **caractérisé en ce que** les moyens de modifier la stratégie de nettoyage comprennent des moyens de transmission d'informations vers un utilisateur distant, en réponse à la détection de débris.

10. Appareil de nettoyage selon la revendication 7, **caractérisé en ce qu'**il comporte des moyens de transmettre les résultats de la détection de débris dans l'eau à une unité extérieure de pilotage de l'appareil.

11. Procédé de pilotage d'un appareil de nettoyage de piscine selon l'une quelconque des revendications 2 à 10, **caractérisé en ce que** le procédé comporte de façon cyclique des étapes suivantes :
- obtention de données de densité de débris dans l'eau à l'intérieur du circuit hydraulique de l'unité de nettoyage (100),
- comparaison de ces données avec au moins un seuil prédéterminé,
- modification de la stratégie de nettoyage de l'unité de nettoyage si et tant que la densité de débris estimée est supérieure à une valeur maximale préalablement choisie.

12. Procédé de pilotage selon la revendication 11, **caractérisé en ce que** la modification de stratégie de nettoyage comporte au moins l'une des opérations suivantes :
- pilotage des mouvements de l'unité de nettoyage au sein du bassin, en réponse à la détection de débris, pour faire évoluer l'unité de nettoyage dans le voisinage de sa localisation actuelle dans la piscine.

13. Procédé de pilotage selon l'une quelconque des revendications 11 à 12, **caractérisé en ce que** le procédé comporte de façon cyclique des étapes suivantes :
- obtention de données de densité de débris dans l'eau en entrée du circuit hydraulique de filtration,
- comparaison des données de densité de saleté avec au moins un second seuil prédéterminé,
- modification des commandes de mouvement de l'unité de nettoyage si et tant que la densité de débris estimée est inférieure à une valeur minimale préalablement choisie, pour éloigner l'unité de nettoyage de sa localisation actuelle dans la piscine.

14. Procédé de pilotage selon l'une quelconque des revendications 11 à 13, **caractérisé en ce que** le procédé comporte en outre une étape initiale de parcours rapide du bassin par l'unité de nettoyage, tout en procédant à l'acquisition de mesures de densité, et de détermination d'au moins un seuil en fonction des valeurs mesurées lors du parcours rapide du bassin.

15. Groupe de nettoyage comportant un appareil de nettoyage selon la revendication 10, et une unité extérieure de pilotage de l'appareil, **caractérisé en ce qu'**il comporte des moyens de modifier le contrôle de l'appareil de nettoyage selon les résultats de détection de débris dans l'eau.

## Patentansprüche

1. Poolreinigungseinrichtung, Folgendes umfassend:
- eine Reinigungseinheit (100),
- mindestens einen Hydraulikkreis zur Flüssigkeitszirkulation zwischen mindestens einem Flüssigkeitseingang (103) und mindestens einem Flüssigkeitsausgang (104) durch eine Filtervorrichtung der Reinigungseinheit (100),
- eine Pumpe, die ausgeführt ist, um eine Wasserzirkulation zwischen dem Flüssigkeitseingang (103) und dem Flüssigkeitsausgang (104) durch die Filtervorrichtung zu forcieren,
- Mittel zum Antreiben und Leiten, die es ermöglichen, für die Bewegungen der Reinigungseinheit zu sorgen,
- Mittel zum Steuern dieser Mittel zum Antreiben und Leiten, **dadurch gekennzeichnet, dass** die Reinigungseinrichtung mindestens ein Mittel zum Detektieren von Rückständen umfasst, das in dem Hydraulikkreis der Reinigungseinheit (100) angeordnet ist.

2. Einrichtung nach Anspruch 1, **dadurch gekennzeichnet, dass** die Mittel zum Detektieren von Rückständen Mittel zum Messen einer Rückstandsdichte in dem Wasser beinhalten.

3. Einrichtung nach einem der Ansprüche 1 bis 2, **dadurch gekennzeichnet, dass** die Mittel zum Messen einer Rückstandsdichte zwischen dem Flüssigkeitseingang 103 in den Hydraulikkreis und dem Flüssigkeitseingang 115 in die Filterkammer 108 angeordnet sind.

4. Einrichtung nach einem der Ansprüche 1 bis 3, **dadurch gekennzeichnet, dass** die Reinigungseinheit (100) auch Mittel zum Messen der Rückstandsdichte in dem Wasser im Bereich von mindestens einem Flüssigkeitsausgang (104) des Filterhydraulikkreises beinhaltet.

5. Einrichtung nach einem der Ansprüche 1 bis 4, **dadurch gekennzeichnet, dass** die Mittel zum Messen einer Rückstandsdichte einen optischen Sensor beinhalten.

6. Einrichtung nach einem der Ansprüche 1 bis 5, **dadurch gekennzeichnet, dass** die Mittel zum Messen einer Rückstandsdichte eine Kamera und Bildanalysemittel beinhalten.

7. Einrichtung nach einem der Ansprüche 1 bis 6, **dadurch gekennzeichnet, dass** sie weiter Mittel zum Ändern der Reinigungsstrategie der Reinigungseinheit (100) als Reaktion auf die Detektion von Rückständen beinhaltet.

8. Einrichtung nach Anspruch 7, **dadurch gekennzeichnet, dass** die Mittel zum Ändern der Reinigungsstrategie Mittel zum Ansteuern der Bewegungen der Reinigungseinheit innerhalb des Beckens als Reaktion auf die Detektion von Rückständen umfassen.

9. Einrichtung nach Anspruch 7, **dadurch gekennzeichnet, dass** die Mittel zum Ändern der Reinigungsstrategie Mittel zum Übertragen von Informationen an einen entfernten Nutzer als Reaktion auf die Detektion von Rückständen umfassen.

10. Einrichtung nach Anspruch 7, **dadurch gekennzeichnet, dass** sie Mittel zum Übertragen der Ergebnisse der Detektion von Rückständen in dem Wasser an eine externe Ansteuerungseinheit der Einrichtung beinhaltet.

11. Verfahren zum Ansteuern einer Poolreinigungseinrichtung nach einem der Ansprüche 2 bis 10, **dadurch gekennzeichnet, dass** das Verfahren in zyklischer Art folgende Schritte beinhaltet:
- Erhalten von Rückstandsdichtedaten im Wasser im Inneren des Hydraulikkreises der Reinigungseinheit (100),
- Vergleichen dieser Daten mit mindestens einem vorbestimmten Schwellenwert,
- Ändern der Reinigungsstrategie der Reinigungseinheit, falls und solange die geschätzte Dichte von Rückständen größer als ein zuvor ausgewählter maximaler Wert ist.

12. Verfahren zum Ansteuern nach Anspruch 11, **dadurch gekennzeichnet, dass** das Ändern der Reinigungsstrategie mindestens eine der folgenden Vorgänge beinhaltet:
- Ansteuern der Bewegungen der Reinigungseinheit innerhalb des Beckens als Reaktion auf die Detektion von Rückständen, um die Reinigungseinheit in die Umgebung ihrer aktuellen Lage in dem Pool bewegen zu lassen.

13. Verfahren zum Ansteuern nach einem der Ansprüche 11 bis 12, **dadurch gekennzeichnet, dass** das Verfahren in zyklischer Art folgende Schritte beinhaltet:
- Erhalten von Rückstandsdichtedaten im Wasser am Eingang des Filterhydraulikkreises,
- Vergleichen der Verunreinigungsdichtedaten mit mindestens einem zweiten vorbestimmten Schwellenwert,
- Ändern der Bewegungssteuerung der Reinigungseinheit, falls und solange die geschätzte Dichte von Rückständen kleiner als ein zuvor ausgewählter minimaler Wert ist, um die Reinigungseinheit von ihrer aktuellen Lage in dem Pool zu entfernen.

14. Verfahren zum Ansteuern nach einem der Ansprüche 11 bis 13, **dadurch gekennzeichnet, dass** das Verfahren weiter einen ursprünglichen Schritt zum schnellen Durchgang durch den Pool durch die Reinigungseinheit beinhaltet, samt Vornahme der Erfassung von Dichtemessungen, und zum Bestimmen mindestens eines Schwellenwerts in Abhängigkeit von den bei dem schnellen Durchgang durch den Pool gemessenen Werten.

15. Reinigungsgruppe, eine Reinigungseinrichtung nach Anspruch 10, und eine äußere Ansteuerungseinheit der Einrichtung beinhaltend, **dadurch gekennzeichnet, dass** sie Mittel zum Ändern der Kontrolle der Reinigungseinrichtung je nach den Ergebnissen der Detektion von Rückständen im Wasser beinhaltet.

## Claims

1. Swimming pool cleaning apparatus comprising:
- a cleaning unit (100),
- at least one hydraulic circuit for liquid circulation between at least one liquid inlet (103) and at least one liquid outlet (104), through a filtration device of the cleaning unit (100),
- a pump designed to force water to circulate between the water inlet (103) and the water outlet (104) through the filtration device,
- driving and guiding means for producing the movements of the cleaning unit,
- control means for these driving and guiding means,
**characterized in that** the cleaning apparatus comprises at least one means for detecting debris disposed in the hydraulic circuit of the cleaning unit (100).

2. Apparatus according to Claim 1, **characterized in that** the means for detecting debris include means for measuring the density of debris in the water.

3. Apparatus according to Claims 1 or 2, **characterized in that** the means for measuring the density of debris are disposed between the water inlet 103 in the hydraulic circuit and the water inlet 115 in the filtration chamber 108.

4. Apparatus according to any one of Claims 1 to 3, **characterized in that** the cleaning unit (100) also includes means for measuring the density of debris in the water at at least one water outlet of the filtering hydraulic circuit.

5. Apparatus according to any one of Claims 1 to 4, **characterized in that** the means for measuring the density of debris include an optical sensor.

6. Apparatus according to any one of Claims 1 to 5, **characterized in that** the means for measuring the density of debris include a camera and image analysis means.

7. Apparatus according to any one of Claims 1 to 6, **characterized in that** it also includes means for modifying the cleaning strategy of the cleaning unit (100) in response to the detection of debris.

8. Apparatus according to Claim 7, **characterized in that** the means for modifying the cleaning strategy comprise means for controlling the movements of the cleaning unit within the pool, in response to the detection of debris.

9. Apparatus according to Claim 7, **characterized in that** the means for modifying the cleaning strategy comprise means for transmitting information to a remote user, in response to the detection of debris.

10. Cleaning apparatus according to Claim 7, **characterized in that** it includes means for transmitting the results of the detection of debris in the water to an external unit for controlling the apparatus.

11. Method for controlling a swimming pool cleaning apparatus according to any one of Claims 2 to 10, **characterized in that** the method includes the following steps in a cyclical manner:
- acquisition of data relating to the density of debris in the water inside the hydraulic circuit of cleaning unit (100),
- comparison of these data with at least one predetermined threshold,
- modification of the cleaning strategy of the cleaning unit if and as long as the estimated density of debris is greater than a maximum value chosen beforehand.

12. Controlling method according to Claims 11, **characterized in that** the modification of the cleaning strategy includes at least one of the following operations:
- control of the movements of the cleaning unit within the pool, in response to the detection of debris, in order to move the cleaning unit around in the vicinity of its current location in the swimming pool.

13. Controlling method according to any one of Claims 11 to 12, **characterized in that** the method includes the following steps in a cyclical manner:
- acquisition of data relating to the density of debris in the water at the entrance of the filtering hydraulic circuit,
- comparison of the dirt density data with at least one second predetermined threshold,
- modification of the commands for moving the cleaning unit if and as long as the estimated density of debris is less than a minimum value chosen beforehand, in order to move the cleaning unit away from its current location in the swimming pool.

14. Controlling method according to any one of Claims 11 to 13, **characterized in that** the method also includes an initial step in which the cleaning unit travels rapidly through the swimming pool while acquiring density measurements, and at least one threshold is determined depending on the values measured during the rapid travel through the pool.

15. Cleaning set comprising a cleaning apparatus according to Claim 10, and an external unit for controlling the apparatus, **characterized in that** it comprises means for modifying the control of the cleaning apparatus depending on the results of the detection of debris in the water.
